# EUROPÄISCHE PATENTSCHRIFT

(11) **EP 0 412 314 B1**
(45) Veröffentlichungstag und Bekanntmachung des Hinweises auf die Patenterteilung: **02.11.1995**
(21) Anmeldenummer: 90113440.3
(22) Anmeldetag: 13.07.1990
(51) Int. Cl.: G02B 13/14, G02B 7/28, G02B 7/32, G02B 15/14

(54) **Infrarot-Abbildungssystem mit einer Vorrichtung zum Ausgleichen des Temperatur-Einflusses auf den Fokussierzustand.**
Infrared imaging system with a device for compensating the temperature effect on the focussing.
Système d'imagerie infrarouge avec un appareil pour compenser l'influence de la température sur la focalisation.

(30) Priorität: 05.08.1989 DE 3925964
(43) Veröffentlichungstag der Anmeldung: 13.02.1991
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Kürbitz, Gunther, Dr., D-7923 Königsbronn-Zang (DE); Marx, Dieter, D-7080 Aalen-Waldhausen (DE); Heinrich, Harald, D-7080 Aalen (DE)

(56) Entgegenhaltungen:
- EP-A- 0 264 360
- DE-A- 2 743 175
- DE-A- 3 122 027
- PATENT ABSTRACTS OF JAPAN, Band 9, Nr. 257 (P-396)(1980), 15. Oktober 1985 ; & JP-A-60 107 611

## Beschreibung

Die Erfindung betrifft ein Infrarot-Abbildungssystem mit einer Vorrichtung zur Eliminierung des Temperatur-Einflusses auf den Fokussierzustand gemäß dem Oberbegriff des Anspruches 1.

Zur Herstellung der Elemente von Infrarot-Abbildungssystemen werden kristalline halbleitende Materialien verwendet, z.B. Ge, Si, ZnSe, CdTe, GaAs, die einen großen Temperaturkoeffizienten der Brechzahl aufweisen. Als Folge davon ist die Fokussierung IR-optischer Abbildungssysteme stark temperaturabhängig.

Ein gattungsgemäßes Infrarot-Abbildungssystem ist aus EP-A-0 217 692, Fig. 7 bekannt. Für das autokollimationssystem ist ein getrennter Detektor außerhalb der Abbildungsebene der Abbildungsoptik vorgesehen. Eine ähnliche Anordnung ist aus DE-A 31 22 027 bekannt. Dort dient sie dazu, die durch Luftdruckänderungen bzw. Temperaturänderungen bei Objektiven für hochauflösende Luftbildaufnahmesysteme verursachte Verlagerung der Schärfenebene zu ermitteln, die dann über eine Verstellbewegung eines Linsengliedes ausgeregelt werden kann. Dazu wird zwischen den Belichtungsvorgängen ein im Objektiv angeordnetes Gitter angeblitzt und in Autokollimation über eine teilverspiegelte Fläche an der Frontseite des Objektivs auf einen im Bereich der Filmebene angeordneten Detektor abgebildet. Dieser besteht aus einem gegen die Filmebene geneigten, ca. 2000 Elemente umfassenden Detektorarray. Das Ausgangssignal des Detektors ist mit der Periodizität des Gitters moduliert, wobei das Maximum der Modulationsamplitude den Schnittpunkt des Detektorarrays mit der Schärfenebene bestimmt. Seine Ablage von der Mittenposition dient zum mikroprozessorgesteuerten Feinabgleich des verstellbaren Linsengliedes.

Bei der EP 0 264 360 wird bei einem scannenden IR-Detektor durch eine Autokollimationseinrichtung die kalte Strahlung des Detektors auf diesen zurückgeworfen, um so eine Temperaturreferenz zu erzeugen.

Es ist die Aufgabe der Erfindung, ein gattungsgemäßes Infrarot-Abbildungssystem möglichst einfach auszubilden.

Dies wird erreicht durch eine Ausführung nach Anspruch 1. Gegenüber der EP-A-0 217 692 sind die Detektoren für das bild und für die Autokollimation vereinigt, so daß sie aus einem einzigen Chip bestehen können und in einem gemeinsamen Kühler angeordnet sein können. Gegenüber der Ausführung der DE-A 31 22 027 entfällt das im IR-Bereich problematische Gitter, es gibt keine Montage unter einem justierkritischen Winkel, der Fotodetektor und die Elektronik werden erheblich vereinfacht. Der mögliche Einfangbereich und die Auflösung sind nicht mehr über den Winkel der Detektorebene gegenseitig eingeschränkt.

Bei der IR-Anwendung ist die Übersetzung der Verschiebung, welche durch die schräggestellte Detektorfläche der DE-A 31 22 027 erreicht wird, nicht erforderlich, da die Brechzahlen der optischen Elemente einen großen Temperaturkoeffizienten haben.

Die mit der Erfindung erzielten Vorteile bestehen insbesondere darin, daß ein bestimmter Fokussierzustand, z.B. die Abstimmung auf unendlich, für ein IR-optisches Abbildungssystem unter allen im Einsatz vorkommenden Temperaturbedingungen gewährleistet ist. Vorteilhafte Ausführungen sind Gegenstand der Unteransprüche 2 bis 4. Ein Ausführungsbeispiel der erfindungsgemäßen Anordnung ist in der Zeichnung dargestellt und wird im folgenden näher beschrieben. Es zeigen
- Fig. 1: eine schematische Darstellung eines Infrarot-Abbildungssystems mit der Vorrichtung zur Eliminierung des Temperatur-Einflusses auf den Fokussierzustand;
- Fig. 2: das Blockschaltbild der elektronischen Einheiten zur Verarbeitung der von der Anordnung nach Figur 1 erzeugten Signale.

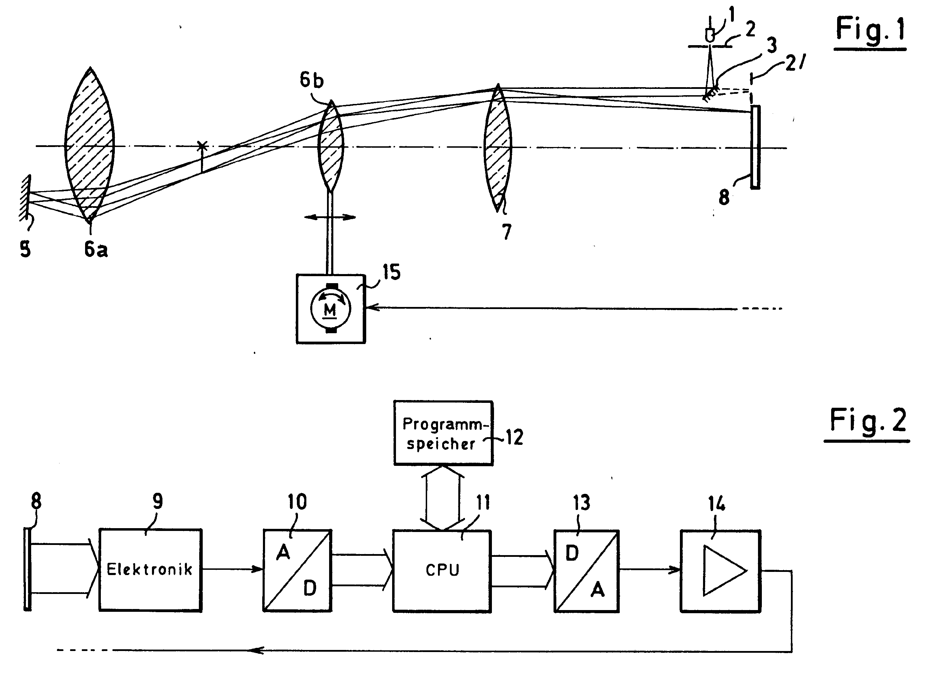

In der Darstellung der Fig. 1 ist mit dem Bezugszeichen (1) eine thermische Hilfsquelle (Infrarotstrahler) bezeichnet, deren optisch wirksame geometrische Ausdehnung durch eine Blende (2) definiert wird. Die zur Blende (2) konjugierte Ebene (2′) befindet sich in der gleichen Ebene wie eine Detektorebene (8). Die von der Blende (2) ausgehenden IR-Strahlen werden durch einen Hilfsspiegel (3) so abgelenkt, daß sie das optische Abbildungssystem (6a, 6b, 7) durchsetzen und auf den planen Spiegel (5) (Autokollimationspiegel) treffen. Von diesem werden die Strahlen in das IR-optische Abbildungssystem (6a, 6b, 7) zurückreflektiert, durchsetzen dieses wieder und treffen auf eines oder mehrere der in der Detektorbildebene (8) angeordneten Detektorelemente.

In der Darstellung der Figur 2 ist die Verarbeitung der von den in der Detektorebene (8) getroffenen Detektorelemente erzeugten Signale ersichtlich. Mit Hilfe der Elektronik (9) werden die elektrischen Signale verstärkt, gefiltert und in einer geeigneten Schaltung (z.B. Spitzenwert-Gleichrichter mit nachgeschaltetem Sample-Hold) ausgewertet und zwischengespeichert. Die zwischengespeicherten Signalwerte werden mit Hilfe eines Analog/Digital-Wandlers (10) digitalisiert und einem Rechner (11), der von einem in einem Programmspeicher (12) abgelegten Programm gesteuert wird, zugeführt. Der Rechner (11) erzeugt digitale Ausgangssignale derart, daß mit ihnen nach Digital-Analog-Wandlung im D/A-Wandler (13) und Verstärkung durch den Verstärker (14) ein Motor (15) ein IR-optisches Element (6b) so bewegt, daß zwischen der Blende (2) der thermischen Hilfsquelle (1) und ihrem Bild (2′) stets die Autokollimationsbedingung aufrecht erhalten wird.

## Patentansprüche

1. Infrarot-Abbildungssystem mit einer Vorrichtung zum Ausgleichen des Temperatur-Einflusses auf den Fokussierzustand, bestehend aus
- einer Infrarot-Abbildungsoptik (6a, 6b, 7),
- einer Infrarot-Sekundärlichtquelle (2), die in zur Bildebene (8) der Abblidungsoptik konjugierten Ebene (2) angeordnet ist,
- einem vor der Abbildungsoptik (6a, 6b, 7) angeordneten Spiegel (5),
einem Fotodetektor (2′), der so angeordnet ist, daß bei korrektem Fokussierzustand der Abblidungsoptik eine Autokollimationsbedingung zwischen der Sekundärlichtquelle (2) und ihrem vom Spiegel (5) durch die Abbildungsoptik auf den Fotodetektor (2′,8) zurückreflektierten Bild besteht,
- einem Verstellantrieb (15), um die Position eines optischen Elements (6b) der Abbildungsoptik (6a, 6b, 7) zu variieren, und
- einer Regelektronik (9-14), die als Funktion der Signale des Fotodetektors (2′, 8) den Verstellantrieb (15) so steuert, daß stets die Autokollimationsbedingung aufrecht erhalten wird,
dadurch gekennzeichnet, daß
- die Sekundärlichtquelle eine einfache, durch eine Infrarotlichtquelle (1) beleuchtete Blende(2) aufweist,
- der Fotodetektor (2′, 8) in der Abbildungsebene (8) der Abbildungsoptik (6a, 6b, 7) angeordnet ist und ein oder mehrere Detektorelemente enthält,
- die Regelelektronik (9, 14) einen Spitzenwert der vom Fotodetektor (2′, 8) erzeugten elektrischen Signale ermittelt und diesen Spitzenwert zur Steuerung des Verstellantriebs (15) benutzt.

2. Infrarot-Abbildungssystem nach Anspruch 1, dadurch gekennzeichnet, daß der Fotodetektor (2′,8) der Vorrichtung zum Ausgleichen des Temperatureinflusses aus einem oder mehreren Detektorelementen von einem bilderfassenden, in der Bildebene angeordneten gerät (8) besteht.

3. Infrarot-Abbildungssystem nach Anspruch 1 oder 2, dadurch gekennzeichnet, daß der Spiegel (5) am Rand des von der Abbildungsoptik (6a, 6b, 7) erfaßten Strahlquerschnitts liegt.

4. Infrarot-Abbildungssystem nach Anspruch 1, 2 oder 3, dadurch gekennzeichnet, daß die geometrische Ausdehnung der Blende (2) so ausgelegt ist, daß sie zusammen mit Größe und Anzahl der Detektorelemente ein optimales Signal/Rausch-Verhältinis der auszuwertenden Detektorsignale bezüglich des maximalen Spitzenwertes erzeugt.

## Claims

1. Infrared imaging system with a device for compensating the temperature effect on the focussing, comprising
- an infrared imaging optical system (6a, 6b, 7),
- an infrared secondary light source (2), which is arranged in the plain (2) conjugated to the image plane (8) of the imaging optical system,
- a mirror (5) arranged in front of the imaging optical system (6a, 6b, 7),
- a photo detector (2′) which is arranged in such a manner, that in case of the correct focussing status of the imaging optical system a condition of autocollimation is established for the secondary light source (2) with respect to its image as retroreflected by the mirror (5) through the imaging optical system onto the photo detector (2′, 8),
- a regulating electronic system (9-14), which controls the positioning drive (15) as a function of the signals of the photo detector (2′, 8) in such a manner, that the condition of autocollimation is maintained continuously,
characterized in that
- the secondary light source is a simple diaphragm (2) illuminated by an infrared light source,
- the photo detector (2′, 8) is arranged in the image plane (8) of the imaging optical system (6a, 6b, 7) and comprises one or several detector elements,
- the regulating electronic system (9, 14) produces a peak value of the signals as given by the photo detector (2′, 8) and it uses this peak value for controlling the positioning drive (15).

2. Infrared imaging system according to claim 1, characterized in that the photo detector (2′, 8) of the device for compensating the temperature effect comprises one or more detector elements of an image capturing device which is arranged in the image plane.

3. Infrared imaging system according to claim 1 or 2, characterized in that the mirror (5) is situated at the periphery of the beam cross section as captured by the imaging optical system.

4. Infrared imaging system according to claim 1, 2 or 3, characterized in that the geometrical size of the diaphragm (2) is defined such that together with the dimension and number of detector elements an optimal signal-to-noise ratio of the detector signals to be evaluated is obtained with respect to the maximum peak value.

## Revendications

1. Système d'imagerie infrarouge avec un appareil pour compenser l'influence de la température sur la focalisation composé
- d'une optique de reproduction à infrarouge (6a, 6b, 7),
- d'une source de lumière infrarouge secondaire (2) disposé dans un plan image (2) conjugué au plan image (8) de ladite optique de reproduction,
- d'un miroir (5) placé devant ladite optique de reproduction (6a, 6b, 7),
- d'un photodétecteur (2′) disposé de manière à ce que l'optique de reproduction en position de focalisation correcte remplisse la condition d'autocollimation entre la source de lumière secondaire (2) et son image réfléchie par le miroir (5) et projetée par l'optique de reproduction sur ledit photodétecteur (2′, 8),
- d'un dispositif de réglage (15) servant à faire varier la position d'un élément optique (6b) à l'intérieur de l'optique de reproduction (6a, 6b, 7),
- d'une électronique de réglage (9-14) commandant le dispositif de réglage (15) en fonction des signaux provenant du photodétecteur (2′, 8), de manière à ce que la condition d'autocollimation soit maintenue en toutes circonstances,
caractérisé en ce que
- la source de lumière secondaire présente un simple diaphragme (2) éclairé par une source de lumière infrarouge (1),
- le photodétecteur (2′, 8) est disposé dans le plan image (8) de l'optique de reproduction (6a, 6b, 7) et qu'il se compose d'un ou de plusieurs éléments détecteurs,
- l'électronique de réglage (9, 14) détermine une valeur de crête des signaux électriques produits par le photodétecteur (2′, 8) et qu'elle utilise cette valeur de crête pour commander le dispositif de réglage (15).

2. Système d'imagerie infrarouge selon la revendication 1, caractérisé en ce que le photodétecteur (2′, 8) de l'appareil servant à compenser l'influence de la température se compose d'un ou de plusieurs éléments détecteurs disposés sur une unité de saisie d'images placée dans le plan image (8).

3. Système d'imagerie infrarouge selon la revendication 1 ou 2, caractérisé en ce que le miroir (5) est positionné sur le bord de la section d'ouverture du faisceau formé par l'optique de reproduction (6a, 6b, 7).

4. Système d'imagerie infrarouge selon l'une quelconque des revendications 1, 2 ou 3, caractérisé en ce que l'ouverture géométrique du diaphragme (2) est conçue de manière à assurer, conjointement avec la taille et le nombre des éléments détecteurs, un rapport signal/bruit optimal des signaux de détecteur à exploiter en vue de la saisie de la valeur de crête maximale.
